# EUROPÄISCHE PATENTSCHRIFT

(11) **EP 3 147 232 B1**
(45) Veröffentlichungstag und Bekanntmachung des Hinweises auf die Patenterteilung: **05.09.2018**
(21) Anmeldenummer: 16190287.9
(22) Anmeldetag: 23.09.2016
(51) Int. Cl.: B65D 19/18, B29C 51/08, B29C 51/26

(54) **TRANSPORTPALETTE FÜR EINEN TRANSPORTBEHÄLTER SOWIE VERFAHREN UND FORMWERKZEUG ZU DESSEN HERSTELLUNG**
TRANSPORT PALLET FOR A TRANSPORT CONTAINER AND METHOD AND MOULDING TOOL FOR PRODUCING THE SAME
PALETTE DE TRANSPORT POUR UN RÉCIPIENT DE TRANSPORT ET PROCÉDÉ ET OUTIL DE FORMAGE POUR SA FABRICATION

(30) Priorität: 23.09.2015 DE 102015116056
(43) Veröffentlichungstag der Anmeldung: 29.03.2017
(73) Patentinhaber: VD-Technology B.V., 6181MA Elsloo (NL)
(72) Erfinder: Hartl, Andreas Alexander, 72221 Haiterbach (DE)
(74) Vertreter: Mammel und Maser

(56) Entgegenhaltungen:
- WO-A1-2011/020154
- WO-A2-2008/030515
- DE-A1-102008 058 238
- US-A- 5 829 595
- US-A1- 2012 291 677

## Beschreibung

Die Erfindung betrifft eine Transportpalette für einen Transportbehälter, bestehend aus auf die Transportpalette aufsetzbaren Seitenwänden und einem Behälteroberteil, sowie ein Verfahren und ein Formwerkzeug zur Herstellung einer solchen Transportpalette.

Aus der DE 94 13 518 U1 ist ein solcher Transportbehälter bekannt. Dieser Transportbehälter umfasst eine Transportpalette, auf welche ein Ring, bestehend aus vier Seitenwänden, aufsetzbar ist. Ein Behälterinnenraum wird durch einen Deckel abgeschlossen. Solche Transportbehälter weisen den Nachteil auf, dass beim Lagern von Schüttgut die Innenräume der Füße mit Schüttgut gefüllt werden und ein Entleeren erschwert ist.

Aus der EP 1 261 528 B1 geht des Weiteren ein Transportbehälter hervor, welcher ebenfalls eine Transportpalette mit einem darauf aufsetzbaren zusammenlegbaren Ring und einem Behälteroberteil aufweist. Damit beim Transport von losem Schüttgut dieses nicht in die Rinnen oder Vertiefungen der Füße gelangt, wird vorgeschlagen, an den Seitenwänden klappbare Bodenabschnitte vorzusehen, die in ihrer Gebrauchsposition auf der Auflagefläche des Palettenbodens aufliegen und eine geschlossene Palettenoberfläche bilden. Dadurch kann das Schüttgut nicht in die Vertiefungen der Füße im Palettenboden gelangen, welche zur Bildung der Füße der Transportpalette erforderlich sind.

Aus der DE 10 2012 219 358 A1 ist ebenfalls eine Transportpalette für einen Transportbehälter bekannt, auf welche ein Ring aufsetzbar ist, der ein Behälteroberteil aufnimmt, um einen Transportbehälter zu bilden. Diese Transportpalette besteht aus einem ersten Formteil und daran angeformten Füßen, sowie einem zweiten Formteil mit einer Auflagefläche. Das erste Formteil und zweite Formteil werden durch ein Tiefziehwerkzeug hergestellt. Vor dem Verbinden des ersten und zweiten Formteils werden in durch die Füße des ersten Formteils gebildeten Vertiefungen Kunststoffschaumkörper eingesetzt, welche den zwischen dem unteren Formteil und dem oberen Formteil durch die Bildung des Fußes entstehenden Hohlraum ausfüllen, um eine erhöhte Steifigkeit der Palette zu erzielen.

Aus der US 5 829 595 A ist eine Transportpalette gemäß dem Oberbegriff des Anspruchs 1 für einen Transportbehälter bekannt. Der Transportbehälter besteht aus auf die Transportpalette aufsetzbaren Seitenwänden und einem Behälteroberteil. Die Transportpalette umfasst ein erstes Formteil, das eine Unterseite der Transportpalette bildet, an welcher Füße angeformt sind, und ein zweites Formteil, welches eine Oberseite der Transportpalette bildet, an welcher ein Palettenboden ausgebildet ist. Das erste Formteil und zweite Formteil werden nach den Twin-Sheet-Verfahren geformt und miteinander verbunden.

Der Erfindung liegt die Aufgabe zugrunde, eine Transportpalette vorzuschlagen, welche oberhalb von Füßen eine ebene Auflage aufweist und eine versteifte Ausbildung der Füße ermöglicht. Der Erfindung liegt des Weiteren die Aufgabe zugrunde, ein Verfahren und ein Formwerkzeug zur Herstellung einer solchen Transportpalette vorzuschlagen, die einfach herzustellen und universell einsetzbar ist und Beeinträchtigungen durch etwaige Vertiefungen bei der Bildung der Füße vermeidet.

Diese Aufgabe wird durch eine Transportpalette gemäß Anspruch 1 gelöst, bei der an einem ersten Formteil zumindest ein Fuß ausgebildet ist, wodurch eine Vertiefung gegenüber einem Palettenboden gebildet ist, die zum Palettenboden weisend offen ist und ein zweites Formteil zumindest eine, die Vertiefung überdeckende und geschlossene Auflagefläche aufweist und der zumindest eine Fuß des ersten Formteils einen Stützabschnitt aufweist, der sich von der Aufstandsfläche des Fußes in Richtung auf das zweite Formteil erstreckt und die Auflagefläche stützt. Diese Ausgestaltung weist den Vorteil auf, dass ein freier Flächenabschnitt der Auflagefläche, der die Aussparung des Fußes überbrückt, durch einen solchen Stützabschnitt abgestützt werden kann. Dadurch kann die Auflagefläche in dem Bereich, in welchem diese die Aussparung überspannt, eine höhere Steifigkeit und Belastbarkeit aufweisen. Die geschlossene Vertiefung weist des Weiteren den Vorteil auf, dass Gegenstände, Schmutz oder dergleichen sich in den Vertiefungen nicht mehr ansammeln und darin verbleiben können. Vielmehr ist die durch den Fuß gebildete Vertiefung zumindest im Bereich der Vertiefung beziehungsweise des Fußes durch die Auflagefläche des zweiten Formteils überdeckt.

Bevorzugt ist je Fuß ein Stützabschnitt vorgesehen. Dieser Stützabschnitt ist bevorzugt mittig zu einer Aufstandsfläche des Fußes angeordnet. Dadurch kann in einfacher Weise eine Abstützung der die Vertiefung des Fußes überspannenden Auflagefläche geschaffen sein.

Die Stützabschnitte können beispielsweise domartig, kegelstumpfartig oder pyramidenstumpfartig oder dergleichen ausgebildet sein.

Des Weiteren ist bevorzugt vorgesehen, dass die Grundfläche des Stützabschnittes kleiner als die Hälfte der Aufstandsfläche des Fußes ist. Somit ist einerseits eine hohe Steifigkeit des Fußes gegeben und andererseits ein hinreichend großer Flächenabschnitt zum Verformen bzw. Tiefziehen des Stützabschnittes aus der Aufstandsfläche heraus gegeben, damit sich dieser Stützabschnitt mit einer Abstützfläche bis an eine Unterseite des zweiten Formteils erstrecken kann.

Des Weiteren ist bevorzugt vorgesehen, dass der Stützabschnitt eine Abstützfläche aufweist, welche mit einer Unterseite des zweiten Formteils verschweißt ist. Dadurch kann die Steifigkeit der Palette zusätzlich erhöht sein.

Des Weiteren ist bevorzugt vorgesehen, dass die Abstützfläche am Stützabschnitt eine zum zweiten Formteil weisende Profilierung aufweist. Eine solche Profilierung kann eine Schweißverbindung mit der Unterseite des zweiten Formteils verbessern. Die Stützabschnitte können beispielsweise domartig, kegelstumpfartig oder pyramidenstumpfartig oder dergleichen ausgebildet sein.

Eine bevorzugte Ausgestaltung der Erfindung sieht vor, dass die die Vertiefung überdeckende Auflagefläche als eine geschlossene Auflagefläche frei von Öffnungen ausgebildet ist, welche sich vorzugsweise über deren gesamten Palettenboden, insbesondere bis zur umlaufenden Rille, erstreckt. Durch die Ausbildung der geschlossenen Auflagefläche kann der Palettenboden für verschiedentliche Arten von Gütern genutzt werden. Es können sowohl Schüttgüter als auch einzeln abgepackte Elemente oder sonstige Waren transportiert werden. Durch die geschlossene Auflagefläche ist eine einfache Entnahme möglich. Darüber hinaus ist auch eine einfache Reinigung des Palettenbodens ermöglicht. Zusätzlich kann auch bei der Lagerung von solchen Transportpaletten verhindert werden, dass sich in den Rinnen Schmutz und Regenwasser ansammelt.

Eine bevorzugte Ausführungsform der Transportpalette sieht vor, dass die Auflagefläche des Palettenbodens plan ausgebildet ist. Dadurch wird eine universelle Auflage für verschiedentliche Waren möglich.

Alternativ kann vorgesehen sein, dass die Auflagefläche mehrere zueinander beabstandete Längsrillen aufweist, die sich parallel zu einer Längsseite der Transportpalette erstrecken und vorzugsweise entlang der gesamten Auflagefläche sich zwischen der umlaufenden Rinne im Randbereich der Transportpalette erstrecken. Diese Ausführungsform weist den Vorteil auf, dass eine zusätzliche Versteifung der Transportpalette erzielt werden kann, wodurch die Belastbarkeit erhöht wird.

Des Weiteren ist bevorzugt vorgesehen, dass die Transportpalette aus einem ersten und einem zweiten Formteil gebildet ist, die miteinander verschweißt sind, wobei das erste Formteil, an welchem die Füße ausgebildet sind, aus einer dickeren Kunststofffolie hergestellt ist, als das zweite Formteil. Diese Ausführungsform weist den Vorteil auf, dass durch das Tiefziehen der Kunststofffolie zur Bildung des ersten Formteils noch hinreichende Material- und Wandstärken für das Fließen des Materials bereitgestellt werden, wobei für die Bildung der geschlossenen Auflagefläche eine geringere Wandstärke genügt.

Des Weiteren ist bevorzugt vorgesehen, dass im Eckbereich der Transportpalette jeweils ein Fuß vorgesehen ist und der freie Abstand zwischen den Füßen im Eckbereich und einem dazwischen liegenden Fuß sowohl an der Längsseite und der Schmalseite der Transportpalette im Wesentlichen gleich sind. Dadurch können insbesondere bei einer Transportpalette mit einer rechteckförmigen Grundfläche sowohl für die Längsseite als auch die Schmalseite gleiche Verhältnisse bezüglich den Eingriffsbreiten für Gabelzinken eines Gabelstaplers gelten, um eine solche Transportpalette aufzunehmen.

Des Weiteren kann vorgesehen sein, dass das erste Formteil in Flächenabschnitten, die sich zwischen den Füßen strecken, Erhöhungen oder Noppen aufweist, welche an einer der Auflagefläche gegenüberliegenden Seite mit dem zweiten Formteil verschweißt sind. Dadurch kann eine hinreichende Aussteifung des Palettenbodens in Bereichen zwischen den Füßen ermöglicht sein.

Die der Erfindung zugrundeliegende Aufgabe wird des Weiteren durch ein Verfahren zur Herstellung einer Transportpalette für einen Transportbehälter gelöst, gemäß Anspruch 11. Eine erste erwärmte Kunststofffolie wird in ein aus einem Ober- und Unterwerkzeug bestehendes Formwerkzeug eingelegt. Darauffolgend wird durch Anlage eines Vakuums an dem Unterwerkzeug die erste Kunststofffolie an eine Negativform des Unterwerkzeugs angelegt und ein erstes Formteil gebildet. Während dem Tiefziehen der ersten Kunststofffolie zur Anlage an der Negativform wird aus dem Oberwerkzeug zumindest ein Stempel in Richtung auf das Unterwerkzeug ausgefahren, der mit einer Stempelfläche an der Kunststofffolie anliegt und diese unterstützend in eine Mulde des Unterwerkzeugs überführt, wobei durch die Mulde die äußere Form des Fußes der Transportpalette hergestellt wird. Die Mulde weist einen in Richtung auf das Oberwerkzeug hervorstehenden Formkörper auf. Der Stempel im Oberwerkzeug umfasst eine Stempelfläche, welche bei einem ausgefahrenen Stempel den Formkörper umgibt oder seitlich daran angrenzt. Da der Stempel nach der Schließbewegung des Oberwerkzeuges und des Unterwerkzeuges ausgefahren und auf die Mulde des Unterwerkzeuges zubewegt wird, liegt die erste Kunststofffolie an einer Oberseite des Formkörpers an und wird entlang des Formkörpers in die Mulde gezogen und verformt, so dass sich zwischen dem Formkörper und dem Stempel ein Stützabschnitt bildet, der sich ausgehend von einem Muldenboden der Mulde in Richtung auf das Oberwerkzeug erstreckt. Darauffolgend wird das Oberwerkzeug abgehoben und der zumindest eine Stempel in das Oberwerkzeug eingefahren. Darauffolgend wird eine zweite erwärmte Kunststofffolie zwischen dem Ober- und Unterwerkzeug eingebracht. Darauffolgend wird an dem Oberwerkzeug ein Vakuum angelegt und die zweite Kunststofffolie zur Anlage unter Bildung eines zweiten Formteils übergeführt. Dabei ist vorgesehen, dass die zweite Kunststofffolie an eine ebene und vertiefungsfreie Werkzeugfläche des Oberwerkzeuges zur Bildung der geschlossenen Auflagefläche des Palettenbodens anliegt. Anschließend wird das Ober- und Unterwerkzeug geschlossen und das erste und zweite Formteil miteinander verschweißt, so dass darauffolgend nach dem Öffnen des Ober- und Unterwerkzeugs die Transportpalette entnommen wird.

Dieses Verfahren weist somit den Vorteil auf, dass das Herstellungsprinzip des Twinsheet-Verfahrens beziehungsweise des Thermoverfahrens beibehalten werden kann, wobei eine Transportpalette hergestellt wird, welche eine geschlossene Auflagefläche eines Palettenbodens aufweist. Durch die im Oberwerkzeug angeordneten, ausfahrbaren Stempel kann einerseits die Herstellung der Füße im ersten Formteil erleichtert werden, wobei beim Einfahren der Stempel in das Oberwerkzeug der Stempel mit einer Werkzeugfläche am Oberteil eine geschlossene ebene Anlagefläche bildet, um diese geschlossene Auflagefläche am Palettenboden auszubilden. Des Weiteren wird durch dieses Verfahren der Vorteil erzielt, dass ohne zusätzliche Einlegeteile relativ große Höhen zwischen einer Auflagefläche des zweiten Formteils und einer Aufstandsfläche des Fußes des ersten Formteils überbrückt werden können. Diese Ausbildung von zumindest einem Stützabschnitt im Fuß ermöglicht eine versteifte Ausgestaltung des Fußes, wodurch auch die Belastbarkeit einer solchen Transportpalette erhöht wird.

Bevorzugt ist vorgesehen, dass beim Verschweißen des ersten und zweiten Formteils bzw. der ersten und zweiten Kunststofffolie mit dem Oberwerkzeug und Unterwerkzeug eine Abstützfläche des Stützabschnittes der ersten Kunststofffolie mit einer Unterseite des zweiten Formteils verschweißt wird. Dabei ist bevorzugt vorgesehen, dass ein verbleibender Abstand von einer Stirnfläche des Formkörpers, der sich vom Muldenboden in Richtung auf das Oberwerkzeug erstreckt und einer Stempelfläche des Stempels im eingefahrenen Zustand zum Oberwerkzeug einem Abstand aus der Dicke der ersten und zweiten Kunststofffolie entspricht oder kleiner ist.

Der in der Mulde angeordnete Formkörper kann auch als ausfahrbarer Stempel am Unterwerkzeug ausgebildet sein. In einem eingefahrenen Zustand kann dann eine ebene Aufstandsfläche des Fußes erzeugt werden.

Die der Erfindung zugrundeliegende Aufgabe wird des Weiteren durch ein Formwerkzeug gemäß Anspruch 14 zur Herstellung einer Transportpalette für einen Transportbehälter gelöst, welches ein Oberwerkzeug und ein Unterwerkzeug aufweist, wobei an dem Unterwerkzeug eine Negativform ausgebildet ist, welche zumindest eine Mulde zur Bildung eines Fußes der Transportpalette umfasst und wobei an dem Oberwerkzeug eine zum Unterwerkzeug weisende ebene Formfläche vorgesehen ist und in dem Oberwerkzeug ein gegenüber der Formfläche ausfahrbarer Stempel vorgesehen ist, dessen Stempelfläche im eingefahrenen Zustand des Stempels bündig zur Formfläche ist, wobei in der Mulde, ausgehend von einem Muldenboden, zumindest ein in Richtung auf das Oberwerkzeug gerichteter Formkörper vorgesehen ist und die Stempelfläche des Stempels im Oberwerkzeug eine Kontur aufweist, welche an die Kontur des Muldenbodens angepasst ist. Dadurch wird ermöglicht, dass während dem Verformen der ersten Kunststofffolie zur Bildung des Fußes einerseits die Kunststofffolie in der Mulde anliegen kann und andererseits an dem Formkörper gleichzeitig ein Stützabschnitt gebildet wird, der sich bis an eine Unterseite einer zweiten Kunststofffolie zur Bildung der Transportpalette erstreckt. Somit kann in einem Verfahrensschritt der Fuß mit einer Aufstandsfläche gebildet werden, welche die Form und/oder Geometrie des Muldenbodens umfasst und gleichzeitig an dem Fuß ein Stützabschnitt angeformt werden, der die Kontur des Formkörpers aufweist.

Gemäß einer ersten Ausführungsform des Formwerkzeuges ist vorgesehen, dass der Formkörper domartig, kegelstumpfartig oder dergleichen ausgebildet ist. Der dem Formkörper gegenüberliegende Stempel im Oberwerkzeug ist bevorzugt als Hohlzylinder ausgebildet, so dass beim Schließen des Formwerkzeuges und Ausfahren des Stempels aus dem Oberwerkzeug der Formkörper in den Stempel eintauchen kann. Dazwischenliegend ist die erste Kunststofffolie vorgesehen, welche zur Bildung des Stützabschnittes verformbar ist. Die Stempelfläche des Stempels entspricht vorzugsweise der verbleibenden Fläche im Muldenboden zur Bildung der Aufstandsfläche des Fußes.

Alternativ ist vorgesehen, dass der Formkörper als Steg ausgebildet ist, der sich über die gesamte Länge oder die gesamte Breite oder über die Diagonale des Fußes erstreckt. Der Stempel weist für einen solchen Formkörper zwei Stempelflächen auf, die in der Breite des Steges zueinander beabstandet sind, so dass beim Ausfahren des Stempels benachbart zum Steg eine erste und zweite bzw. linke und rechte Stempelfläche abgesenkt werden kann.

Bevorzugt kann beim Verschweißen des ersten und zweiten Formteils miteinander der Stempel aus dem Unterwerkzeug nochmals ausgefahren werden, um die Abstützfläche des Stützabschnittes an dem ersten Formteil mit einer auf das erste Formteil zugerichteten Unterseite des zweiten Formteils zu verschweißen.

Eine vorteilhafte Ausgestaltung des Verfahrens sieht vor, dass im Oberwerkzeug zylindrisch ausgebildete Stempel vorgesehen sind, welche in die konisch ausgebildete Mulde im Unterwerkzeug zur Bildung des Fußes im ersten Formteil eintaucht. Dadurch ist nach dem Tiefziehen des Fußes im ersten Formteil ein leichtes Rückführen des oder der Stempel in das Oberwerkzeug möglich.

Eine weitere bevorzugte Ausgestaltung des Verfahrens sieht vor, dass vor dem Verschweißen des ersten und zweiten Formteils das Unterwerkzeug mit dem darin anliegenden ersten Formteil erwärmt wird, bevor die beiden Kunststofffolien zur Bildung des zweiten Formteils in das Formwerkzeug eingebracht werden. Dadurch kann ein verbessertes Verschweißen erzielt werden.

Die Erfindung, sowie weitere vorteilhafte Ausführungsformen und Weiterbildungen derselben, werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht eines Transportbehälters,
Figur 2 eine schematische Schnittansicht des Transportbehälters gemäß Figur 1 mit einer erfindungsgemäßen Transportpalette,
Figur 3 eine perspektivische Ansicht des Details A in Figur 2,
Figur 4 eine schematische Schnittdarstellung gemäß Detail A in Figur 2,
Figur 5 eine schematische Ansicht von oben auf die Transportpalette gemäß Figur 3,
Figur 6 die erfindungsgemäße Ausführungsform des Fußes für die Transportpalette gemäß Figur 3,
Figuren 7 bis 12 schematische Ansichten von aufeinanderfolgenden Verfahrensschritten zur Herstellung einer erfindungsgemäßen Transportpalette.

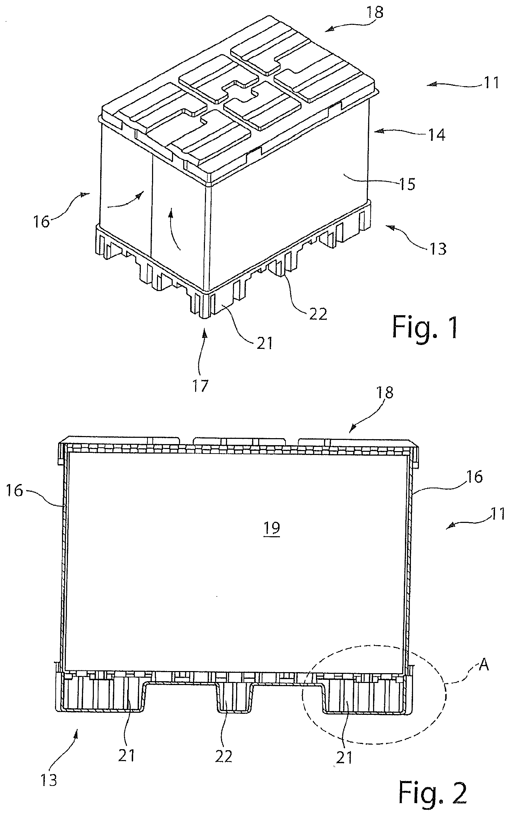

In Figur 1 ist perspektivisch ein Transportbehälter 11 zum Lagern und/oder Transport von Waren, Gütern, Stückgut oder Schüttgut vorgesehen. Die Figur 2 zeigt den Transportbehälter 11 gemäß Figur 1 im Vollquerschnitt. Hierbei handelt es sich um einen Mehrwegbehälter.

Dieser Transportbehälter 11 umfasst eine Transportpalette 13 mit einem Palettenboden 12 sowie einen zusammenlegbaren Ring 14, der beispielsweise aus vier Seitenwänden 15, 16 gebildet ist, die im jeweiligen Eckbereich 17 miteinander verbunden sind. Die Anzahl der Seitenwänden 15, 16 sowie deren Zuordnung ist an die Grundform der Transportpalette 13 beziehungsweise des Palettenbodens 12 angepasst. Im Ausführungsbeispiel ist ein rechteckförmiger Palettenboden 12 vorgesehen, so dass zwei lange Seitenwände 15 und zwei kürzere Seitenwände 16 den Ring 14 bilden. Alternativ können auch quadratische Palettenböden 12 mit gleichlangen Seitenwänden 15, 16 vorgesehen sein. Ebenso können Palettenböden 12 vorgesehen sein, die beispielsweise auch Ringe 14 aus sechs oder acht Seitenwänden bilden.

Der Transportbehälter 11 umfasst des Weiteren ein Behälteroberteil 18 beziehungsweise einen Deckel, der auf den zusammenlegbaren Ring 14 aufsetzbar ist. Durch die Transportpalette 13, den Ring 14 und das Behälteroberteil 18 ist ein geschlossener Paletteninnenraum 19 gebildet. Die Transportpalette 13 umfasst beispielsweise neun Füße 21, 22, die unmittelbar angeformt sind, wie nachfolgend noch näher beschrieben wird.

Die Transportpalette 13 umfasst eine im äußeren Randbereich umlaufende Rinne 23. Die Rinne 23 ist zumindest in den Eckbereichen 17 des Palettenbodens 12 durch einen Rand 24 umgeben. Diese Rinne 23 verläuft entlang dem Randbereich des Palettenbodens 12. Vorteilhafterweise erstreckt sich der Rand 24 vollumfänglich um die Rinne 23 und bildet einen äußeren Abschluss des Palettenbodens 12. Innerhalb der Rinne 23 ist eine Auflagefläche 26 vorgesehen, die als geschlossene Fläche ausgebildet ist und durch die Rinne 23 begrenzt ist. Der Rand 24 ist vorzugsweise gleich oder höher als die Auflagefläche 26 ausgebildet. Die Ebene der vollständig geschlossenen Auflagefläche 26 des Palettenbodens 12 ist geringfügig oberhalb der Rinne 23, so dass ein Absatz für den zusammenlegbaren Ring 14 gebildet ist. Gegenüberliegend zu diesem Absatz ist der Rand 24 vorgesehen, der zumindest das Niveau der Auflagefläche 26 aufweist oder höher als die Auflagefläche 26 ist.

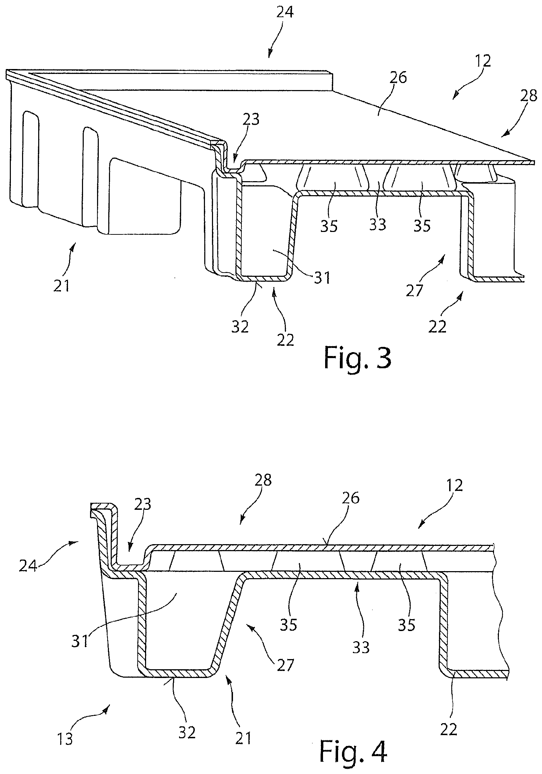

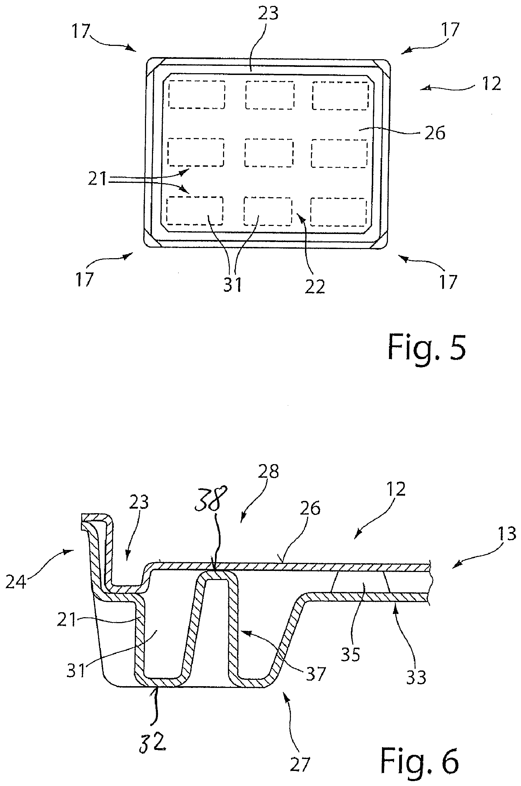

In Figur 3 ist eine perspektivische Detailansicht A gemäß Figur 2 und in Figur 4 eine schematische Seitenansicht im Schnitt der Detailansicht A gemäß Figur 2 dargestellt. Die Transportpalette 13 ist durch Tiefziehen nach dem Twinsheet-Verfahren hergestellt. Aus einer ersten und einer zweiten Kunststofffolie wird durch Tiefziehen ein erstes Formteil 27 und ein zweites Formteil 28 gebildet, die durch Schweißen fest miteinander verbunden sind, um die Transportpalette 13 zu bilden. Bei dieser Transportpalette 13 ist bevorzugt vorgesehen, dass die erste Kunststofffolie zur Bildung des ersten Formteils 27 stärker als die zweite Kunststofffolie zur Bildung des zweiten Formteils 28 ausgebildet ist. Beispielsweise weist die erste Kunststofffolie eine Stärke von 6 mm und die zweite Kunststofffolie eine Stärke von 2 mm auf, so dass die Formteile 27, 28 an den aneinanderliegenden und verschweißten Stellen eine Gesamtstärke von 8 mm aufweisen. Die stärkere Kunststofffolie wird für das erste Formteil 27 verwendet, welches die Unterseite des Palettenbodens 12 bildet, an dem im Eckbereich 17 Füße 21 und dazwischenliegend Füße 22 ausgebildet sind. Diese Füße 21, 22 werden durch das Tiefziehen der ersten Kunststofffolie, die als ebene Platte bereitgestellt wird, erzielt. Dadurch entstehen im ersten Formteil 27 durch die Füße 21, 22 gebildete Vertiefungen 31, welche in Richtung zum Palettenboden 12 weisend offen ausgebildet sind. Diese Bereiche sind strichliniert in Figur 5 dargestellt, welche eine Ansicht von oben auf den Palettenboden 12 zeigt.

Die Oberseite der Transportpalette 13 wird durch das zweite Formteil 28 gebildet. Das zweite Formteil 28 weist zumindest eine Abschnittsfläche 26 auf, welche die Vertiefungen 31 überdeckt, so dass der Palettenboden 12 nicht mehr durch die Vertiefungen 31 unterbrochen ist, sondern geschlossene Vertiefungen 31 durch die zumindest sich über die jeweilige Vertiefung 31 erstreckende Auflagefläche 26 oder Abschnitte der Auflagefläche 26 gebildet ist. Bevorzugt ist vorgesehen, dass sich die Auflagefläche 26 vom linken zum rechten Rand der Rinne 23 des Palettenbodens 12 entlang der Längsseite als auch der Schmalseite erstreckt, wodurch eine vollständig geschlossene Auflagefläche 26 ausgebildet ist. Die Auflagefläche 26 kann in einem Bereich zwischen den Füßen 21, 22 durch Näpfe oder Noppen 35 abgestützt werden, welche an dem ersten Formteil 27 ausgebildet und in entgegengesetzter Richtung zu den Füßen 21, 22 ausgerichtet sind. Dadurch kann ein versteifter Palettenboden 12 geschaffen werden, wobei dieser versteifte Bereich sich zwischen den Füßen 21, 22 erstreckt. Dies weist auch den Vorteil auf, dass ein Abschnitt der Auflagefläche 26, der die Vertiefung 31 überdeckt, hinreichend steif und druckstabil ausgebildet sein kann, da unmittelbar im benachbarten und daran angrenzenden Bereich der Vertiefung 31 die Näpfe oder Noppen 35 zur Abstützung der Auflagefläche 26 ausgebildet sind. Diese Näpfe oder Noppen 35 werden bevorzugt durch Tiefziehen in der ersten Kunststofffolie bei Herstellung des ersten Formteils 27 gebildet. Dadurch kann insbesondere die Auflagefläche 26 vollständig geschlossen ausgebildet sein.

Im jeweiligen Eckbereich 17 der Transportpalette 13 sind die jeweils äußeren Füße 21 vorzugsweise länglich ausgebildet und vorzugsweise entlang der Längsseite ausgerichtet. Beispielsweise haben diese Füße 21 die doppelte Länge oder mehr als der dazwischen liegende Fuß 22. Letzteres gilt beispielsweise für die Längsseite des Transportbehälters 13. Für die Schmalseite des Transportbehälters 13 kann die Breite der Füße 21, 22 entlang der Schmalseite der Transportpalette 13 gleich ausgebildet sein. Des Weiteren ist in der Mitte des Palettenbodens 12 vorzugsweise ebenfalls ein Fuß 22 vorgesehen. Die Abstände zwischen den äußeren Füßen 21 der Längsseite und dem dazwischen angeordneten Fuß 22 sind derart bemessen, dass ein Freiraum für Gabelzinken eines Gabelstaplers zum Ergreifen der Transportpalette 13 vorgesehen ist. Dieser Freiraum ist vorzugsweise ebenfalls an der Schmalseite der Transportpalette 13 vorgesehen, so dass mit einer Einstellung der Gabelzinken am Gabelstapler die Transportpalette 13 sowohl von der Längsseite als auch der Schmalseite her transportiert werden kann.

Figur 6 zeigt eine detaillierte Ausgestaltung des Fußes 21 in einer weiteren Schnittansicht für die erfindungsgemäße Transportpalette 13 Von der Aufstandsfläche 32 des Fußes 21 ausgehend wird die erste Kunststofffolie wiederum in Richtung auf das zweite Formteil 28 verformt, so dass in dem Fuß 21 ein Stützabschnitt 37 ausgebildet ist, der sich innerhalb der Vertiefung 31 erstreckt. Der Stützabschnitt 37 wird somit ausgehend von der Aufstandsfläche 32 des Fußes 21, 22 durch Tiefziehen gebildet. Dabei erstreckt sich eine Abstützfläche 38 am oberen Ende des Stützabschnitts 37 bis in die Ebene des zweiten Formteils 28. Bevorzugt liegt eine stirnseitige Abstützfläche 38 des Stützabschnittes 37 an einer Unterseite des zweiten Formteils 28 an und ist mit diesem verschweißt. Die Auflagefläche 26 wird bevorzugt gestützt. Dadurch kann die die Vertiefung 31 überspannende Auflagefläche 26 zusätzlich abgestützt werden. Insbesondere bei größeren Füßen 21 ist dies aufgrund der größeren Vertiefungen 31 von Vorteil. Alternativ kann ein solcher Stützabschnitt 37 auch bei schmäleren Füßen 22 vorgesehen sein. Solche Stützabschnitte 37 können domartig, kegelstumpfartig, pyramidenstumpfartig oder dergleichen ausgebildet sein.

Der Stützabschnitt 37 kann auch in Form eines Steges ausgebildet werden. Ein solcher Steg kann sich über die Länge oder Breite oder über die Diagonale des Fußes erstrecken, das heißt, dass sich der Steg entlang zwischen zwei einander gegenüberliegenden Seitenwänden oder Eckbereichen des Fußes erstreckt. Der Steg erstreckt sich von der Aufstandsfläche des Fußes bis zur Unterseite der zweiten Kunststofffolie beziehungsweise der Auflagefläche am Palettenboden.

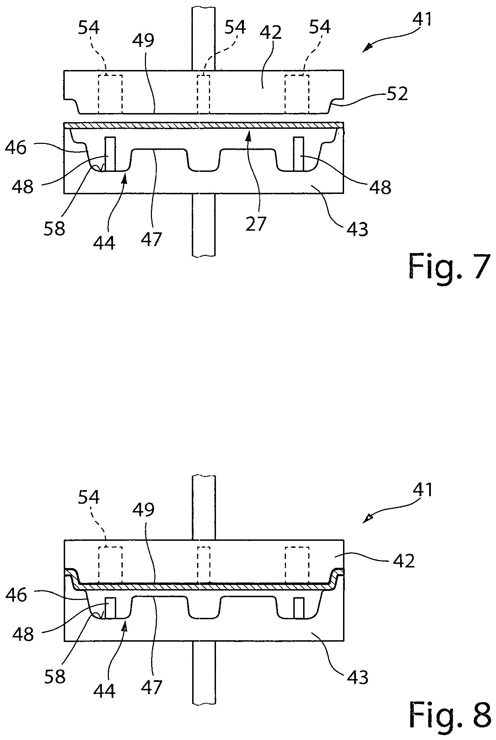

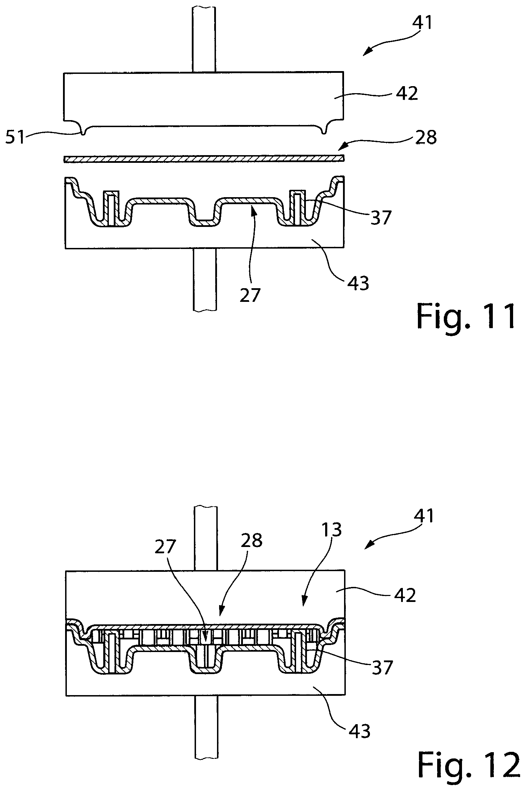

Nachfolgend wird die Herstellung einer Transportpalette 13 anhand der Figuren 7 bis 12 näher beschrieben:
Eine erste Kunststofffolie wird beispielsweise in einem separaten Ofen aufgeheizt (nicht dargestellt) und wird nach dem Erwärmen in ein Formwerkzeug 41 eingeführt (Figur 7). Dieses Formwerkzeug 41 umfasst ein Oberwerkzeug 42 und ein Unterwerkzeug 43. Das Unterwerkzeug 43 umfasst eine Negativform 44, welche die untere Außenkontur der Transportpalette 13 bildet. Es sind Mulden 46 zur Ausbildung der Füße 21, 22 sowie ebene Abschnitte 47 vorgesehen, um die Flächenabschnitte 33, insbesondere mit daran angeordneten Noppen 35, auszubilden. Das Oberwerkzeug 42 umfasst eine ebene Formfläche 49, welche durch Vorsprünge 51 (zum besseren Verständnis in Figur 11 dargestellt) zur Ausbildung der Rinne 23 im Palettenboden umgeben und begrenzt ist. Außerhalb der Vorsprünge 51 sind Konturen 52 vorgesehen, um den Rand 24 des Palettenbodens 12 zu bilden.

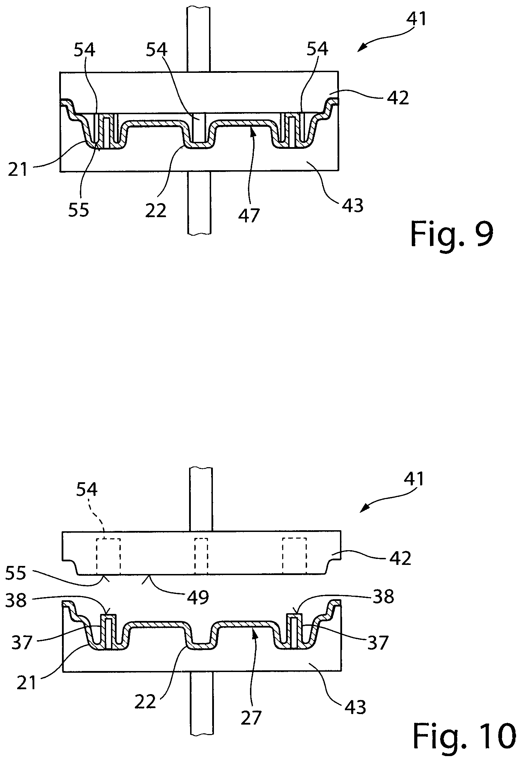

Nach dem Einbringen der erwärmten ersten Kunststofffolie oder nach Einbringen der Kunststofffolie in das Formwerkzeug 41 und dem Erwärmen der Kunststofffolie in dem Formwerkzeug 41 wird an dem Unterwerkzeug 43 ein Vakuum angelegt, um den Tiefziehvorgang der ersten Kunststofffolie in die Negativform 44 zu bewirken. Gleichzeitig wird das Oberwerkzeug 42 auf das Unterwerkzeug 43 zum Schließen des Formwerkzeugs 41 zugeführt (Figur 8). Zur Ausbildung der Füße 21, 22 ist bevorzugt vorgesehen, dass in dem Oberwerkzeug 42 Stempel 54 vorgesehen sind, welche beim Tiefziehen mit deren Stempelfläche an der ersten Kunststofffolie angreifen und diese zur Bildung des ersten Formteils 27 in Richtung auf das Unterwerkzeug 43 zuführen und in die Mulden 46 eintauchen, um den Tiefziehvorgang durch Vakuum zu unterstützen. Dadurch wird ein verbessertes Fließen der Kunststofffolie zur Ausbildung der Füße 21, 22 erzielt. Die Stempel 54 sind bevorzugt zylindrisch ausgebildet, so dass anschließend ein leichtes Entformen möglich ist. Die Mulden 46 zur Bildung der Füße 21, 22 sind konisch ausgebildet und weiten sich gegenüber dem Oberwerkzeug 42 auf. Nachdem die Stempel 54 ausgefahren sind und die erste Kunststofffolie zum ersten Formteil 27 verformt wurde, wie dies in Figur 9 dargestellt ist, wird das Formwerkzeug 41 geöffnet, wobei die Stempel 54 wieder in ihre Ausgangslage zurückgeführt werden. Die Stirnfläche der Stempel 54 ist in der Ausgangslage beziehungsweise eingefahrenen Position bündig zur Formfläche 49 des Oberwerkzeugs 42, so dass eine geschlossene Fläche gebildet ist, um eine ebene und geschlossene Auflagefläche 26 des Palettenbodens 12 herzustellen.

Sofern gleichzeitig mit der Bildung der Füße 21, 22 die Stützabschnitte 38 angeformt werden sollen, ist an dem Unterwerkzeug 43 ein Formkörper 48 vorgesehen. Ein solcher Formkörper 48 ist in den Figuren dargestellt. Dieser Formkörper 48 erstreckt sich ausgehend von einem Muldenboden 58 der Mulde 56, welche zur Bildung einer Kontur des Fußes 21, 22 vorgesehen ist. Eine Aufstandsfläche 32 des Fußes 21, 22 wird durch die verbleibende Kontur des Muldenbodens 58 bestimmt. Innerhalb des Muldenbodens 58 erstreckt sich der Formkörper 48. Eine Außenkontur des Muldenbodens 58 ist durch die seitlichen Wände der Mulde 46 begrenzt.

Der Formkörper 48 kann domartig, kegelstumpfförmig oder dergleichen ausgebildet sein. Alternativ kann auch vorgesehen sein, dass dieser Formkörper 48 als Steg ausgebildet ist.

Der in dem Oberwerkzeug 42 angeordnete Stempel 54 ist an die Form und Kontur des Formkörpers 48 einerseits und an die Kontur des Muldenbodens 58 andererseits angepasst. Bei einem Formkörper 48, der sich aus dem Muldenboden 56 heraus erstreckt und beispielsweise als Dom oder Stab oder dergleichen mit einer runden oder eckigen Umfangskontur ausgebildet ist, umfasst der Stempel 54 eine Stempelfläche 55, welche ringförmig ausgebildet ist. Der Stempel 54 ist bevorzugt als Hohlzylinder ausgebildet. Dadurch wird ermöglicht, dass während dem Verformen der ersten Kunststofffolie der Formkörper 48 in den Stempel 54 eintauchen kann und gleichzeitig die Stempelfläche 55 zum Muldenboden 58 positioniert werden kann. Somit können einerseits die Aufstandsflächen 32 des Fußes 21, 22 und andererseits der Stützabschnitt 38 im Fuß 21, 22 angeformt und ausgebildet werden.

Sofern der Stützabschnitt 37 als Steg ausgebildet werden soll, der sich über die gesamte Breite, Länge oder Diagonale des Fußes erstreckt, ist die Stempelfläche entsprechend der Breite des Steges unterbrochen. Es werden zwei Stempelflächen benachbart zu dem Steg in die Mulde ausgefahren.

Das erste Formteil 27 verbleibt im Unterwerkzeug, wie dies in Figur 10 dargestellt ist. Darauffolgend wird im nächsten Arbeitsschritt die zweite Kunststofffolie vorzugsweise erwärmt in das Formwerkzeug 41 eingeführt, wie dies in Figur 11 dargestellt ist. Darauffolgend wird an dem Oberwerkzeug 42 ein Vakuum angelegt, so dass die zweite Kunststofffolie zur Bildung des zweiten Formteils 28 an dem Oberwerkzeug 42 anliegt. Gleichzeitig wird das Oberwerkzeug 42 zum Unterwerkzeug 43 zugeführt, wie dies in Figur 12 dargestellt ist, so dass das erste Formteil 27 und zweite Formteil 28 zur Bildung des Palettenbodens 12 miteinander verschweißt werden.

Zur Herstellung eines Palettenfußes 21 gemäß Figur 6 kann das Unterwerkzeug 43 dahingehend modifiziert werden, dass in der Mulde 46 ein Stempel vorgesehen ist, der in Richtung auf das Oberwerkzeug 42 ausfahrbar ist. Der im Oberwerkzeug 42 angeordnete Stempel 54 wird als zylinderförmiger oder rohrförmiger Stempel mit einer geschlossenen Stirnseite ausgebildet. Folglich kann beim Anlegen des Vakuums im Unterwerkzeug 43 und dem darauffolgenden Ausfahren des Stempels 54 aus dem Oberwerkzeug 42 nach und nach das gegenläufige Ausfahren des zusätzlichen Stempels aus dem Unterwerkzeug 43 in den Stempel 54 hinein angesteuert werden.

## Patentansprüche

1. Transportpalette für einen Transportbehälter (11), der aus auf die Transportpalette (13) aufsetzbaren Seitenwänden (15, 16) und einem Behälteroberteil (18) besteht, welche zumindest ein erstes und zweites Formteil (27, 28) aufweist, die nach dem Twinsheet-Verfahren geformt und miteinander verbunden sind, und das erste Formteil (27) eine Unterseite der Transportpalette (13) bildet, an welcher Füße (21, 22) angeformt sind und das zweite Formteil (27, 28) eine Oberseite der Transportpalette (13) bildet, an welcher ein Palettenboden (12) ausgebildet ist, wobei der Palettenboden (12) eine Auflagefläche (26) umfasst, die durch eine zumindest abschnittsweise im äußeren Randbereich umlaufende Rinne (23) begrenzt ist und an dem ersten Formteil (27) durch den zumindest einen Fuß (21, 22) eine Vertiefung (31) in dem ersten Formteil (27) gebildet ist, die zum Palettenboden (12) weisend offen ist, **dadurch gekennzeichnet, dass** die Auflagefläche (26) des zweiten Formteils (28) die zumindest eine Vertiefung (31) überdeckt und als geschlossene, die Vertiefung (31) überdeckende Auflagefläche (26) ausgebildet ist und zumindest ein Fuß (21, 22) des ersten Formteils (27) einen Stützabschnitt (37) aufweist, der sich von einer Aufstandsfläche (32) des Fußes (21, 22) in Richtung auf das zweite Formteil (28) erstreckt und die Auflagefläche (26) des zweiten Formteils (28), welche die Vertiefung (31) des Fußes (21, 22) überdeckt, stützt.

2. Transportpalette nach Anspruch 1, **dadurch gekennzeichnet, dass** ein Stützabschnitt (37) je Fuß (21, 22) vorgesehen ist, der vorzugsweise mittig zur Aufstandsfläche (32) des Fußes (21, 22) vorgesehen ist.

3. Transportpalette nach Anspruch 1 oder 2, **dadurch gekennzeichnet, dass** eine Grundfläche des Stützabschnittes (37) kleiner als die Hälfte der Aufstandsfläche (32) des Fußes (21, 22) ist.

4. Transportpalette nach Anspruch 1, **dadurch gekennzeichnet, dass** der Stützabschnitt (37) vorzugsweise domartig, kegelstumpfartig oder pyramidenstumpfartig ausgebildet ist und sich von einer Aufstandsfläche (32) in die Vertiefung (31) hinein erstreckt.

5. Transportpalette nach einem der vorhergehenden Ansprüche, **dadurch gekennzeichnet, dass** der Stützabschnitt (37) eine Abstützfläche (38) aufweist, welche mit einer Unterseite des zweiten Formteils (28) verschweißt ist und vorzugsweise die Abstützfläche (38) eine zum zweiten Formteil (28) weisende Profilierung aufweist.

6. Transportpalette nach einem der vorhergehenden Ansprüche, **dadurch gekennzeichnet, dass** die Auflagefläche (26) als eine geschlossene Auflagefläche (26) frei von Öffnungen ausgebildet ist, die sich vorzugsweise über den gesamten Palettenboden (12) erstreckt.

7. Transportpalette nach einem der vorhergehenden Ansprüche, **dadurch gekennzeichnet, dass** die Auflagefläche (26) plan ausgebildet ist oder dass die Auflagefläche (26) mehrere zueinander beabstandete Längsrillen aufweist, die sich parallel zur Längsseite des Palettenbodens (12) erstrecken und sich vorzugsweise entlang der gesamten Auflagefläche (26) erstrecken.

8. Transportpalette nach Anspruch 1, **dadurch gekennzeichnet, dass** das erste Formteil (27) aus einer dickeren Kunststofffolie als die Kunststofffolie des zweiten Formteils (28) hergestellt ist.

9. Transportpalette nach einem der vorhergehenden Ansprüche, **dadurch gekennzeichnet, dass** im Eckbereich (17) des Palettenbodens (12) jeweils ein Fuß (21) vorgesehen ist und der freie Abstand zwischen den Füßen (21) im Eckbereich (17) und einem dazwischenliegenden Fuß (22, 21) sowohl an der Längsseite als auch der Schmalseite des Palettenbodens (12) im Wesentlichen gleich sind.

10. Transportpalette nach einem der vorhergehenden Ansprüche, **dadurch gekennzeichnet, dass** das erste Formteil (27) auf einer Unterseite Flächenabschnitte (33) aufweist, die sich zwischen den Füßen (21, 22) erstrecken, wobei in diese Flächenabschnitte (33) mehrere Erhöhungen oder Noppen (35) eingeformt sind, welche sich in Richtung auf die Auflagefläche (26) des zweiten Formteils (28) erstrecken und mit der der Auflagefläche (26) gegenüberliegenden Seite des zweiten Formteils (28), verschweißt sind.

11. Verfahren zur Herstellung einer Transportpalette (13) gemäß einem der vorliegenden Ansprüchen für einen Transportbehälter (11), bestehend aus auf die Transportpalette (13) aufsetzbaren Seitenwänden (15, 16) und einem Behälteroberteil (18),
- bei dem eine erste vorzugsweise erwärmte Kunststofffolie in ein Formwerkzeug (41) zwischen ein Oberwerkzeug (42) und ein Unterwerkzeug (43) eingelegt wird,
- bei dem das Oberwerkzeug (42) und Unterwerkzeug (43) aufeinander zugeführt werden und unter Einspannung der ersten Kunststofffolie geschlossen werden, und die erste Kunststofffolie durch Anlegen eines Vakuums am Unterwerkzeug (43) an eine Negativform (44) des Unterwerkzeugs (43) angelegt und das erste Formteil (27) gebildet wird,
- bei dem während dem Anlegen des Vakuums an dem Unterwerkzeug (43) aus dem Oberwerkzeug (42) zumindest ein Stempel (54) in Richtung auf eine Mulde (46) in der Negativform (44) im Unterwerkzeug (43) ausgefahren wird, wobei die Mulde (46) einen in Richtung auf das Oberwerkzeug (42) hervorstehenden Formkörper (48) aufweist, und der Stempel (54) eine Stempelfläche (55) aufweist, welche bei einem ausgefahrenen Stempel (54) den Formkörper (48) umgibt oder seitlich an den Formkörper (48) angrenzt,
- bei dem die Stempelfläche (55) des Stempels (54) an der ersten Kunststofffolie anliegt und in die Mulde (46) eintaucht und mindestens abschnittsweise eine Aufstandsfläche (32) des Fußes (21, 22) zum Boden der Mulde (46) gebildet wird und ein Stützabschnitt (37) zwischen dem Stempel (54) und dem Formkörper (48) gebildet wird,
- bei dem der zumindest eine Stempel (54) in das Oberwerkzeug (42) eingefahren und das Oberwerkzeug (42) gegenüber dem Unterwerkzeug (43) abgehoben wird,
- bei dem eine zweite vorzugsweise erwärmte Kunststofffolie zwischen dem Oberwerkzeug (42) und Unterwerkzeug (43) eingebracht wird,
- bei dem die zweite Kunststofffolie durch Anlegen eines Vakuums am Oberwerkzeug (42) des zweiten Formteils (28) zur Anlage an dem Oberwerkzeug (42) angebracht wird, welches eine ebene und vertiefungsfreie Formfläche (49) zur Bildung der zumindest einen, die Vertiefungen (31) der Füße (21, 22) des ersten Formteils (27) überdeckenden Anlagefläche (26) des Palettenbodens (12) aufweist, und
- bei dem das Oberwerkzeug (42) und das Unterwerkzeug (43) geschlossen und das erste und zweite Formteil (27, 28) miteinander verschweißt werden und nach dem Öffnen des Oberwerkzeugs (42) und des Unterwerkzeugs (43) die Transportpalette (13) aus dem Formwerkzeug (41) entnommen wird.

12. Verfahren nach Anspruch 11, **dadurch gekennzeichnet, dass** beim Verschweißen des ersten und zweiten Formteils (27, 28) mit dem Oberwerkzeug (42) und Unterwerkzeug (43) eine Abstützfläche (38) des Stützabschnittes (37) mit der Unterseite des zweiten Formteils (28) verschweißt wird.

13. Verfahren nach Anspruch 11 oder 12, durch gekennzeichnet, dass für das erste Formteil (27) eine dickere Kunststofffolie als für das zweite Formteil (28) ausgewählt wird.

14. Formwerkzeug zur Herstellung einer Transportpalette (13) gemäß einem der Ansprüchen 1 bis 10 für einen Transportbehälter (11), bestehend aus auf die Transportpalette (13) aufsetzbaren Seitenwänden (15, 16) und einem Behälteroberteil (18),
- mit einem Oberwerkzeug (42) und einem Unterwerkzeug (43),
- mit einer an dem Unterwerkzeug (43) ausgebildeten Negativform (44), welche zumindest eine Mulde (46) zur Bildung eines Fußes (21, 22) der Transportpalette (13) umfasst,
- mit einer zum Unterwerkzeug (43) weisenden ebenen Formfläche (49) am Oberwerkzeug (42),
- mit zumindest einem in dem Oberwerkzeug (42) angeordneten und gegenüber der Formfläche (49) ausfahrbaren Stempel (54), dessen Stempelfläche (55) im eingefahrenen Zustand des Stempels (54) bündig zur Formfläche (49) ist,
**dadurch gekennzeichnet,**
- **dass** in der Mulde (46) im Unterwerkzeug (43) ein Muldenboden (58) zur Bildung einer Aufstandsfläche (32) des Fußes (21, 22) vorgesehen ist, und dass in dem Muldenboden (58) ein Formkörper (48) vorgesehen ist, der sich in Richtung auf das Oberwerkzeug (42) erstreckt und die Stempelfläche (55) des Stempels (54) im Oberwerkzeug (42) eine Kontur aufweist, welche an die Kontur des Muldenbodens (58) angepasst ist.

15. Formwerkzeug nach Anspruch 14, **dadurch gekennzeichnet,**
- **dass** der Formkörper (48) domartig ausgebildet ist und der Stempel (54) als Hohlzylinder ausgebildet ist, wobei im eingefahrenen Zustand des Stempels (54) innerhalb des Stempels (54) ein Flächenabschnitt im Oberwerkzeug (43) vorgesehen ist, durch welchen die ebene Formfläche (49) am Oberwerkzeug (43) gebildet ist, oder
- **dass** der Formkörper (48) als Steg ausgebildet ist und der Stempel (54) zwei Stempelflächen (55) aufweist, die in der Breite des Steges beabstandet sind und zwischen den ausfahrbaren Stempelflächen (55) ein Flächenabschnitt im Oberwerkzeug (43) vorgesehen ist, der bündig zur Formfläche (49) am Oberwerkzeug (42) ausgerichtet ist.

## Claims

1. A transport pallet for a transport container (11) which consists of lateral walls (15, 16) that is fitteable onto the transport pallet (13) and of a container top (18), said transport pallet having at least one first and one second moulded part (27, 28) formed and joined together using twin sheet technology, said first moulded part (27) forming a bottom of the transport pallet (13) that has feet (21, 22) integrally formed therewith, and said second moulded part (27, 28) forming a top of the transport pallet (13) on which a pallet base (12) is formed, said pallet base (12) comprising a contact surface (26) which is delimited by a circumferential groove (23) extending along its outer periphery at least in certain portions thereof, and said first moulded part (27) having a depression (31) corresponding to the foot (21, 22) which is formed in the first moulded part (27) and is open on the side facing the pallet base (12), **characterised in that** the contact surface (26) of the second moulded part (28) covers said at least one depression (31) and is realised as a closed contact surface (26) covering the depression (31) and **in that** at least one foot (21, 22) of the first moulded part (27) comprises a support portion (37) which extends from a standing surface (32) of the foot (21, 22) in the direction of the second moulded part (28) and supports the contact surface (26) of the second moulded part (28) which covers the depression (31) of the foot (21, 22).

2. The transport pallet as claimed in claim 1, **characterised in that** one support portion (37) per foot (21, 22) is provided and is preferably provided centrally relative to the standing surface (32) of the foot (21, 22).

3. The transport pallet as claimed in claim 1 or 2, **characterised in that** a base surface of the support portion (37) is smaller than half of the standing surface (32) of the foot (21, 22).

4. The transport pallet as claimed in claim 1, **characterised in that** the support portion (37) is preferably realised in a dome-like, a frusto-conical, or a pyramid-like shape and extends from a standing surface (32) into the depression (31).

5. The transport pallet as claimed in any of the preceding claims, **characterised in that** the support portion (37) has a support surface (38) which is welded to a lower surface of the second moulded part (28) and **in that** preferably the support surface (38) has a profile facing toward the second moulded part (28).

6. The transport pallet as claimed in any of the preceding claims, **characterised in that** the contact surface (26) is realised as a closed contact surface (26) having no openings and extending preferably across the entire pallet base (12) .

7. The transport pallet as claimed in any of the preceding claims, **characterised in that** the contact surface (26) is planar in shape or **in that** the contact surface (26) has a plurality of longitudinal grooves spaced apart from one another which extend in parallel with the longitudinal side of the pallet base (12) and preferably extend along the entire contact surface (26).

8. The transport pallet as claimed in claim 1, **characterised in that** the first moulded part (27) is manufactured from a plastic film which is thicker than the plastic film of the second moulded part (28).

9. The transport pallet as claimed in any of the preceding claims, **characterised in that** a foot (21) is provided in each corner area (17) of the pallet base (12) and **in that** the free spacing between the feet (21) situated respectively in each corner area (17) and a foot (22, 21) situated therebetween is essentially identical on both the longitudinal side and the narrow side of the pallet base (12).

10. The transport pallet as claimed in any of the preceding claims, **characterised in that** the first moulded part (27) has surface portions (33) formed on a lower side thereof which extend between the feet (21, 22), a plurality of raised portions or studs (35) being integrally formed with these surface portions (33), said studs extending in the direction of the contact surface (26) of the second moulded part (28) and being welded to the side of the second moulded part (28) facing away from the contact surface (26).

11. A method of manufacturing a transport pallet (13) for a transport container (11) as claimed in any of the preceding claims consisting of lateral walls (15, 16) that is fitteable onto the transport pallet (13) and a container top (18),
- in which a first, preferably heated, plastic film is placed in a moulding tool (41) between an upper tool (42) and a lower tool (43),
- in which the upper tool (42) and the lower tool (43) are moved towards each other and are closed, with the first plastic film being clamped therebetween and the first plastic film being applied to a negative mould (44) of the lower tool (43) by applying a vacuum on the lower tool (43) and the first moulding part (27) being thus formed,
- in which during the applying of the vacuum on the lower tool (43), at least one punch (54) is extended from the upper tool (42) in the direction of a well (46) formed in the negative mould (44) of the lower tool (43), said well (46) having a moulding body (48) protruding in the direction of the upper tool (42) and the punch (54) having a punch surface (55) which surrounds the moulding body (48) or laterally adjoins the moulding body (48) when the punch (54) is extended,
- in which the punch surface (55) of the punch (54) is applied to the first plastic film and plunges into the well (46), thus forming at least in certain portions a standing surface (32) of the foot (21, 22) with respect to the bottom of the well (46) and forming a support portion (37) between the punch (54) and the moulding body (48),
- in which the at least one punch (54) is retracted into the upper tool (42) and the upper tool (42) is lifted with respect to the lower tool (43),
- in which a second, preferably heated, plastic film is inserted between the upper tool (42) and the lower tool (43),
- in which the second plastic film is caused to be applied to the upper tool (42) by applying a vacuum to the upper tool (42) of the second moulding part (28), which upper tool has a planar moulding surface (49) without depressions for forming the at least one contact surface (26) of the pallet base (12) covering the depressions (31) of the feet (21, 22) of the first moulded part (27), and
- in which the upper tool (42) and the lower tool (43) are closed and the first and second moulding parts (27, 28) are welded together and, once the upper tool (42) and the lower tool (43) have been opened, the transport pallet (13) is removed from the moulding tool (41) .

12. The method as claimed in claim 11, **characterised in that** during the welding of the first and second moulded parts (27, 28) using the upper tool (42) and the lower tool (43), a support surface (38) of the support portion (37) is welded to a lower surface of the second moulded part (28).

13. The method as claimed in claim 11 or 12, **characterised in that** for the first moulded part (27) a thicker plastic film is selected than for the second moulded part (28).

14. A moulding tool for manufacturing a transport pallet (13) for a transport container (11) as claimed in any one of claims 1 to 10, consisting of lateral walls (15, 16) that may be fitted onto the transport pallet (13) and a container top (18), having
- an upper tool (42) and a lower tool (43),
- a negative mould (44) formed on the lower tool (43) which comprises at least one well (46) for forming a foot (21, 22) of the transport pallet (13),
- a planar moulding surface (49) formed on the upper tool (42) and facing toward the lower tool (43),
- at least one punch (54) disposed in the upper tool (42) and extendible relative to the moulding surface (49), the punch surface (55) of which is level with the moulding surface (49) when the punch (54) is in its retracted condition,
**characterised in that**
- the well (46) in the lower tool (43) has a well bottom (58) provided therein for forming a standing surface (32) of the foot (21, 22) and **in that** said well bottom (58) has a moulding body (48) provided therein which extends in the direction of the upper tool (42), and **in that** the punch surface (55) of the punch (54) disposed in the upper tool (42) has a contour that is adapted to the contour of the well bottom (58).

15. The moulding tool as claimed in claim 14, **characterised in that**,
- the moulding body (48) is shaped in the form of a dome and the punch (54) is shaped in the form of a hollow cylinder, with a surface portion being provided in the upper tool (43), within the punch (54), by which the planar moulding surface (49) is formed on the upper tool (43) when the punch (54) is in its retracted condition, or
- the moulding body (48) is shaped in the form of a web and the punch (54) has two punch surfaces (55) which are spaced apart across the width of the web, and **in that** between the extendible punch surfaces (55) a surface portion is provided in the upper tool (43) which is aligned such as to be level with the moulding surface (49) on the upper tool (42).

## Revendications

1. Palette de transport pour un récipient de transport (11) constitué de parois latérales (15, 16) qui peuvent être placées sur la palette de transport (13) et d'une partie supérieure de récipient (18), laquelle palette présente au moins une première et une deuxième pièce moulée (27, 28) qui sont formées et jointes selon le procédé de thermoformage double-paroi dit «twin-sheet», la première pièce moulée (27) formant une face inférieure de la palette de transport (13) sur laquelle sont formés des pieds (21, 22) et la deuxième pièce moulée (27, 28) formant une face supérieure de la palette de transport (13) sur laquelle est formé un fond de palette (12), ledit fond de palette (12) comprenant une surface d'appui (26) qui est délimitée par une rigole (23) s'étendant au moins partiellement dans la zone périphérique extérieure, et sur la première pièce moulée (27) étant prévu un creux (31) ouvert vers le fond de palette (12) et formé dans ladite première pièce moulée (27) par ledit au moins un pied (21, 22), **caractérisée en ce que** la surface d'appui (26) de la deuxième pièce moulée (28) recouvre ledit au moins un creux (31) et est formée en tant que surface d'appui (26) fermée recouvrant le creux (31) et **en ce qu'**au moins un pied (21, 22) de la première pièce moulée (27) présente une partie de support (37) qui s'étend depuis une surface de contact (32) du pied (21, 22) en direction de la deuxième pièce moulée (28) et soutient la surface d'appui (26) de la deuxième pièce moulée (28) laquelle recouvre le creux (31) du pied (21, 22).

2. Palette de transport selon la revendication 1, **caractérisée en ce qu'**il est prévu respectivement une partie de support (37) par pied (21, 22), laquelle est disposée de préférence de manière centrale par rapport à la surface de contact (32) du pied (21, 22).

3. Palette de transport selon la revendication 1 ou 2, **caractérisée en ce qu'**une surface de base de la partie de support (37) est plus petite que la moitié de la surface de contact (32) du pied (21, 22) .

4. Palette de transport selon la revendication 1, **caractérisée en ce que** la partie de support (37) est réalisée de préférence sous forme de dôme, de cône tronqué ou de tronc de pyramide et s'étend depuis une surface de contact (32) jusque dans le creux (31).

5. Palette de transport selon l'une quelconque des revendications précédentes, **caractérisée en ce que** la partie de support (37) présente une surface de soutien (38) qui est soudée à une face inférieure de la deuxième pièce moulée (28) et **en ce que** la surface de soutien (38) présente de préférence un profil tourné vers la deuxième pièce moulée (28).

6. Palette de transport selon l'une quelconque des revendications précédentes, **caractérisée en ce que** la surface d'appui (26) est formée en tant que surface d'appui (26) fermée, exempte d'ouvertures, laquelle s'étend de préférence sur l'ensemble du fond de palette (12).

7. Palette de transport selon l'une quelconque des revendications précédentes, **caractérisée en ce que** la surface d'appui (26) est réalisée de manière plane ou **en ce que** la surface d'appui (26) présente plusieurs rainures longitudinales espacées entre elles, lesquelles s'étendent de manière parallèle au côté longitudinal du fond de palette (12) et s'étendent de préférence tout le long de la surface d'appui (26).

8. Palette de transport selon la revendication 1, **caractérisée en ce que** la première pièce moulée (27) est fabriquée à partir d'une feuille de matière plastique plus épaisse que la feuille de matière plastique utilisée pour la deuxième pièce moulée (28).

9. Palette de transport selon l'une quelconque des revendications précédentes, **caractérisée en ce que** dans la zone d'angle (17) du fond de palette (12) est prévu respectivement un pied (21) et que l'espace libre entre les pieds (21) situés dans la zone d'angle (17) et un pied (22, 21) intermédiaire est essentiellement le même, et ce aussi bien sur le côté longitudinal que sur le côté étroit du fond de palette (12).

10. Palette de transport selon l'une quelconque des revendications précédentes, **caractérisée en ce que** la première pièce moulée (27) présente, sur une face inférieure, des parties de surface (33) qui s'étendent entre les pieds (21, 22), dans lesdites parties de surface (33) étant formé(e)s plusieurs saillies ou tétons (35) qui s'étendent en direction de la surface d'appui (26) de la deuxième pièce moulée (28) et qui sont soudé(e)s à la face de la deuxième pièce moulée (28) située à l'opposé de ladite surface d'appui (26).

11. Procédé destiné à fabriquer une palette de transport (13) selon l'une quelconque des revendications précédentes pour un récipient de transport (11) constitué de parois latérales (15, 16) qui peuvent être placées sur ladite palette de transport (13) et d'une partie supérieure de récipient (18),
- lors duquel une première feuille de matière plastique, de préférence échauffée, est placée dans un outil de moulage (41), entre un outil supérieur (42) et un outil inférieur (43),
- lors duquel l'outil supérieur (42) et l'outil inférieur (43) sont amenés l'un vers l'autre, puis fermés en bloquant la première feuille de matière plastique, et en ce que ladite première feuille de matière plastique est placée, par application d'un vide au niveau de l'outil inférieur (43), de manière à reposer contre un moule femelle (44) de l'outil inférieur (43), formant ainsi la première pièce moulée (27),
- lors duquel pendant l'application du vide au niveau de l'outil inférieur (43), au moins un poinçon (54) sort de l'outil supérieur (42) en direction d'une cuvette (46) ménagée dans le moule femelle (44) situé dans l'outil inférieur (43), la cuvette (46) présentant un corps de moulage (48) faisant saillie en direction de l'outil supérieur (42) et le poinçon (54) présentant une surface de poinçon (55) qui, lorsque ledit poinçon (54) est sorti, entoure le corps de moulage (48) ou est contigu aux côtés latéraux dudit corps de moulage (48),
- lors duquel la surface de poinçon (55) du poinçon (54) repose sur la première feuille de matière plastique et plonge dans la cuvette (46) et une surface de contact (32) du pied (21, 22) est au moins en partie formée vers le fond de la cuvette (46) et une partie de support (37) est formée entre le poinçon (54) et le corps de moulage (48),
- lors duquel ledit au moins un poinçon (54) est rentré dans l'outil supérieur (42) et l'outil supérieur (42) est soulevé par rapport à l'outil inférieur (43),
- lors duquel une deuxième feuille de matière plastique, de préférence échauffée, est placée entre l'outil supérieur (42) et l'outil inférieur (43),
- lors duquel la deuxième feuille de matière plastique est placée, en appliquant un vide au niveau de l'outil supérieur (42) de la deuxième pièce à mouler (28), de manière à reposer contre l'outil supérieur (42) qui présente une surface de moulage (49) plane et exempte de creux destinée à former ladite au moins une surface d'appui (26) du fond de palette (12) laquelle recouvre les creux (31) des pieds (21, 22) de la première pièce moulée (27), et
- lors duquel l'outil supérieur (42) et l'outil inférieur (43) sont fermés et la première et la deuxième pièce moulée (27, 28) sont assemblées l'une à l'autre par soudage et en ce que, après l'ouverture de l'outil supérieur (42) et de l'outil inférieur (43), la palette de transport (13) est sortie de l'outil de moulage (41).

12. Procédé selon la revendication 11, **caractérisé en ce que**, lors du soudage de la première et de la deuxième pièce moulée (27, 28) au moyen de l'outil supérieur (42) et de l'outil inférieur (43), une surface de soutien (38) de la partie de support (37) est soudée à la face inférieure de la deuxième pièce moulée (28).

13. Procédé selon la revendication 11 ou 12, **caractérisé en ce que** la feuille de matière plastique choisie pour la première pièce moulée (27) est plus épaisse que celle choisie pour la deuxième pièce moulée (28).

14. Outil de moulage destiné à fabriquer une palette de transport (13) selon l'une quelconque des revendications 1 à 10 pour un récipient de transport (11) constitué de parois latérales (15, 16) qui peuvent être placées sur ladite palette de transport (13) et d'une partie supérieure de récipient (18),
- avec un outil supérieur (42) et un outil inférieur (43),
- avec un moule femelle (44) qui est formé dans l'outil inférieur (43) et qui comprend au moins une cuvette (46) destinée à former un pied (21, 22) de la palette de transport (13),
- avec une surface de moulage (49) plane située dans l'outil supérieur (42) et tournée vers l'outil inférieur (43),
- avec au moins un poinçon (54) qui est disposé dans l'outil supérieur (42) et qui peut être sorti par rapport à la surface de moulage (49) et dont la surface de poinçon (55) forme une surface plane avec la surface de moulage (49) lorsque le poinçon (54) est à l'état rentré,
**caractérisé en ce que**
- dans la cuvette (46) située dans l'outil inférieur (43) est prévu un fond de cuvette (58) en vue de former une surface de contact (32) du pied (21, 22) et **en ce que** dans ledit fond de cuvette (58) est prévu un corps de moulage (48) qui s'étend en direction de l'outil supérieur (42) et que la surface de poinçon (55) du poinçon (54) situé dans l'outil supérieur (42) présente un contour qui est adapté au contour du fond de cuvette (58) .

15. Outil de moulage selon la revendication 14, **caractérisé en ce que**
- le corps de moulage (48) est réalisé en forme de dôme et **en ce que** le poinçon (54) est réalisé en tant que cylindre creux, une partie de surface formant la surface de moulage plane (49) de l'outil supérieur (43) étant prévu au niveau de l'outil supérieur (43), et ce à l'intérieur du poinçon (54), lorsque ledit poinçon (54) est à l'état rentré, ou
- le corps de moulage (48) est réalisé en forme de partie allongée et **en ce que** le poinçon (54) présente deux surfaces de poinçon (55) espacées l'une de l'autre selon la largeur de la partie allongée et **en ce qu'**entre les surfaces de poinçon (55) qui peuvent être sorties est prévue une partie de surface située dans l'outil supérieur (43) laquelle est orientée par rapport à la surface de moulage (49) de l'outil supérieur (42) de manière à former une surface plane.
